# EUROPÄISCHE PATENTSCHRIFT

(11) **EP 3 083 074 B1**
(45) Veröffentlichungstag und Bekanntmachung des Hinweises auf die Patenterteilung: **10.01.2018**
(21) Anmeldenummer: 14815616.9
(22) Anmeldetag: 10.12.2014
(51) Int. Cl.: B05B 12/14, B05C 11/10, B01F 15/04

(54) **VERFAHREN ZUM AUFTRAGEN EINER VISKOSEN MASSE**
METHOD FOR APPLYING A VISCOUS MASS
PROCEDE DE DEPOT D'UNE MASSE VISQUEUSE

(30) Priorität: 16.12.2013 DE 102013020629
(43) Veröffentlichungstag der Anmeldung: 26.10.2016
(73) Patentinhaber: SCA Schucker GmbH & Co. KG, 75015 Bretten (DE)
(72) Erfinder: KOHLHASE, Nils, 71229 Leonberg (DE); LEONHARDT, Olaf, 75417 Mühlacker (DE)
(74) Vertreter: Patentanwälte Bregenzer und Reule Partnerschaftsgesellschaft mbB
(86) Internationale Anmeldenummer: PCT/EP2014/077133
(87) Internationale Veröffentlichungsnummer: WO 2015/091127

(56) Entgegenhaltungen:
- EP-A1- 0 304 026
- EP-A2- 1 291 271
- DE-A1- 3 818 930
- DE-A1-102005 026 050
- US-A- 4 875 955
- US-A1- 2002 189 753

## Beschreibung

Die Erfindung betrifft ein Verfahren zum Auftragen einer mindestens zweikomponentigen, härtbaren und viskosen Masse in Form eines Massestrangs oder einer Reihe von Massepunkten auf ein Werkstück, wobei ein Auftragsvorgang zu einem Auftragsstartzeitpunkt beginnt und zu einem Auftragsendzeitpunkt endet, und wobei das Werkstück mit der aufgetragenen Masse für einen Weiterverarbeitungsvorgang bestimmt ist, der zu einem Weiterverarbeitungs-Startzeitpunkt beginnt und zu einem Weiterverarbeitungs-Endzeitpunkt endet.

Bei bekannten Verfahren dieser Art wird beispielsweise ein zwei- oder mehrkomponentiger Klebstoff auf ein Autokarosserieteil aufgetragen, und das Karosserieteil wird entweder nach dem Auftragsvorgang oder einige Zeit später mit einem anderen Karosserieteil verbunden, indem das andere Karosserieteil auf den Massestrang oder die Reihe von Massepunkten aufgedrückt wird und die Masse sodann aushärtet. Bei großen Werkstücken, auf die ein langer Massestrang aufgetragen wird und bei denen der Auftragsvorgang daher geraume Zeit andauert, besteht oftmals das Problem, dass der zum Auftragsstartzeitpunkt aufgetragene Anfang des Massestrangs geraume Zeit vor dem zum Auftragsendzeitpunkt aufgetragenen Ende des Massestrangs aushärtet. Dies kann dazu führen, dass zum Weiterverarbeitungs-Startzeitpunkt zwar das Ende des Massestrangs noch ohne weiteres weiterverarbeitbar ist, der Anfang des Massestrangs aber bereits ausgehärtet ist und nicht mehr weiter verarbeitet, beispielsweise mit einem anderen Karosserieteil verbunden werden kann. Dasselbe gilt für eine Reihe von Massepunkten, von denen zum Weiterverarbeitungs-Startzeitpunkt die zuerst aufgetragenen Massepunkte bereits ausgehärtet sein können.

Aus der DE 10 2005 026 050 A1 ist ein Verfahren zum Aufbringen von Raupen aus einer pastösen Masse bekannt, bei dem die Mengenzufuhr der Komponenten der pastösen Masse in eine Mischkammer zeitabhängig geregelt wird, um zum Ende des Auftrags einer Raupe ein langsamer aushärtendes Gemisch zu erzeugen. Damit sind längere Unterbrechungen des Auftragsvorgangs möglich, ohne dass die Mischkammer gespült werden muss. Aus der DE 10 2008 000 126A1 ist ein Auftragsverfahren bekannt, bei dem die Topfzeit einer durch Rotationsguss auf eine zu beschichtende Walze aufgebrachten Mischung auf einen gewünschten Wert eingestellt wird.

Es ist daher Aufgabe der Erfindung, ein Verfahren der eingangs genannten Art derart weiterzubilden, dass eine Weiterverarbeitung des Massestrangs bzw. der Reihe von Massepunkten erleichtert wird.

Diese Aufgabe wird erfindungsgemäß dadurch gelöst, dass das Mischungsverhältnis der Komponenten durch eine Steuereinrichtung in Abhängigkeit von vorgegebenen und/oder gemessenen Parametern während des Auftragsvorgangs derart variiert wird, dass die auf das Werkstück aufgetragene Masse zum Weiterverarbeitungs-Startzeitpunkt und bevorzugt auch zum Weiterverarbeitungs- Endzeitpunkt an jeder Stelle des Massetrangs bzw. in jedem Massepunkt vorteilhaft zu gleichen Maßen weiterverarbeitbar ist. Insbesondere soll die Topfzeit der Masse an jeder Stelle des Massestrangs bzw. in jedem Massepunkt zu dem vor dem Auftragsvorgang bereits bekannten und zweckmäßig vorgebbaren Weiterverarbeitungs-Startzeitpunkt und bevorzugt auch zum Weiterverarbeitungs-End-Endzeitpunkt noch nicht überschritten sein.

In den meisten Anwendungsfällen weisen die Komponenten eine Grundkomponente und einen Grundhärter auf. Dabei ist es möglich, dass das Mischungsverhältnis der Grundkomponente und des Grundhärters während des Auftragsvorgangs variiert wird, wobei die Konzentration des Grundhärters gegenüber der Konzentration der Grundkomponente ansteigt. Der zuerst aufgetragene Anfang des Massestrangs bzw. die zuerst aufgetragenen Massepunkte härtet bzw. härten dann nach einer längeren Zeitspanne aus als das zu einem späteren Zeitpunkt aufgetragene Ende des Massestrangs bzw. die zuletzt aufgetragenen Massepunkte. Diese Ausführungsform hat den Vorteil, dass lediglich zwei Komponenten benötigt werden.

Es ist jedoch auch möglich, dass die Grundkomponente und der Grundhärter in konstantem Mischungsverhältnis aufgetragen werden und dass mindestens eine Zusatzkomponente in variabler Konzentration beigemischt wird. Die Zusatzkomponente oder eine der Zusatzkomponenten kann ein das Aushärten der Masse beschleunigender Zusatzhärter sein, dessen Konzentration im Verlauf des Auftragsvorgangs ansteigt. Es ist jedoch auch möglich, dass die Zusatzkomponente oder eine der Zusatzkomponenten ein das Aushärten der Masse verzögernder Verzögerer ist, dessen Konzentration im Verlauf des Auftragsvorgangs sinkt. Beide Varianten bewirken im Endergebnis, dass der zuerst aufgetragene Anfang des Massestrangs bzw. die zuerst aufgetragenen Massepunkte länger zum Aushärten braucht bzw. brauchen als das zuletzt aufgetragene Ende des Massestrangs bzw. die zuletzt aufgetragenen Massepunkte.

Gemäß einem vorteilhaften Ausführungsbeispiel wird das Mischungsverhältnis der Komponenten in Abhängigkeit der vorgegebenen und/oder gemessenen Parameter derart variiert, dass die auf das Werkstück aufgetragene Masse an jeder Stelle des Massestrangs bzw. in jedem Massepunkt ungefähr oder möglichst genau zum gleichen, nach dem Weiterverarbeitungs-Endzeitpunkt liegenden Zeitpunkt beginnt auszuhärten. Es kann auch ein Zeitfenster vorgegeben werden, innerhalb dessen die Masse an ihren einzelnen Stellen aushärtet. Der Zeitpunkt, zu dem die Aushärtung beginnt, kann beispielsweise kurz nach dem zum Weiterverarbeitungs-Endzeitpunkt abgeschlossenen Zusammenfügen des mit der Masse versehenen Werkstücks mit einem anderen Werkstück liegen.

Die vorgegebenen Parameter, von denen die zeitliche Änderung des Mischungsverhältnisses abhängig ist, können beispielsweise die Auftragsdauer, also der Abstand zwischen dem Auftragsstartzeitpunkt und dem Auftragsendzeitpunkt, oder der zeitliche Abstand zwischen dem Auftragsstartzeitpunkt oder dem Auftragsendzeitpunkt und dem Weiterverarbeitungs-Startzeitpunkt oder dem Weiterverarbeitungs-Endzeitpunkt sein. Vorgegebene Parameter können zudem die spezifischen Eigenschaften der einzelnen Komponenten sein. Als gemessene Parameter kommen insbesondere die Temperatur der Umgebung, die Temperatur des Werkstücks, die Temperatur der Komponenten und die Temperatur der Masse in Betracht, welche mittels eines Temperaturfühlers gemessen werden können.

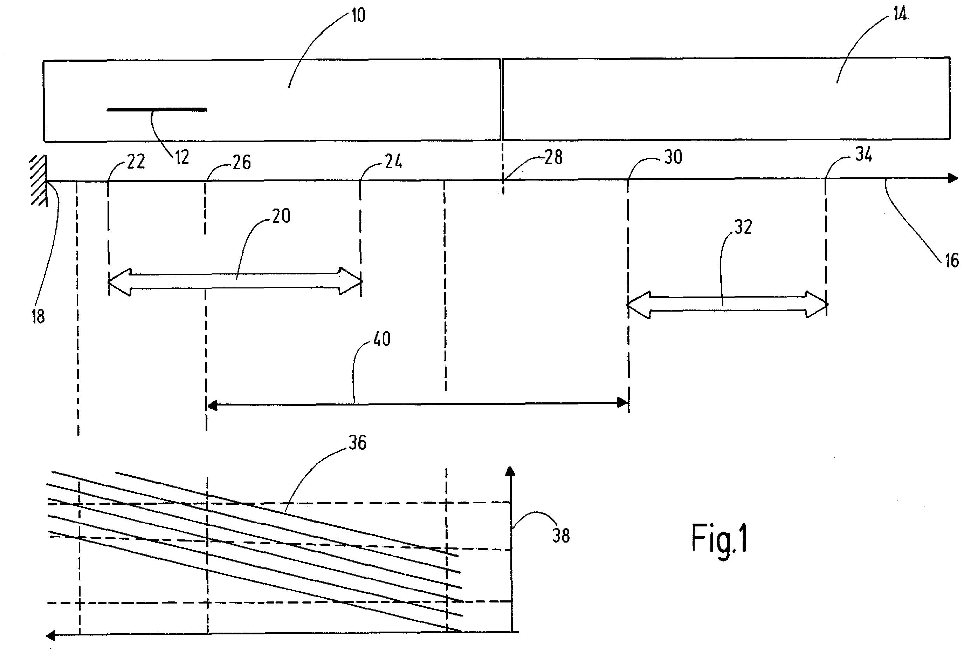

Im Folgenden wird die Erfindung anhand eines in der Zeichnung in schematischer Weise dargestellten Ausführungsbeispiels näher erläutert. Es zeigt
- Fig. 1: eine schematische Darstellung eines Klebstoffauftragsverfahrens in Diagrammform.

In der Zeichnung ist schematisch in Diagrammform dargestellt, wie ein zweikomponentiger Klebstoff bestehend aus einer Grundkomponente und einem Grundhärter in einer Applikationsstation 10 in Form eines Klebstoffstrangs 12 auf ein Werkstück aufgebracht wird, welches zu einem späteren Zeitpunkt mit einem anderen Werkstück in einer Fügestation 14 zusammengefügt wird. Die Abfolge der Arbeitsschritte ist schematisch über einer Zeitachse 16 dargestellt, deren Nullpunkt 18 mit dem Zeitpunkt zusammenfällt, an dem das Werkstück in die Applikationsstation 10 eingebracht wird. Der Klebstoffauftragsvorgang 20 beginnt in einem Auftragsstartzeitpunkt 22 und endet in einem Auftragsendzeitpunkt 24. In der Zeichnung ist der Klebstoffstrang 12 schematisch zu einem zwischen dem Auftragsstartzeitpunkt 22 und dem Auftragsendzeitpunkt 24 liegenden Auftragszeitpunkt 26 dargestellt. Zu einem Übergabezeitpunkt 28 wird das Werkstück von der Applikationsstation 10 an die Fügestation 14 übergeben. Zu einem nach dem Übergabezeitpunkt 28 liegenden Weiterverarbeitungsstartzeitpunkt 30 beginnt ein Weiterverarbeitungsvorgang 32, in dem das mit dem Klebstoffstrang 12 versehene Werkstück mit dem anderen Werkstück zusammengefügt wird, und der zu einem Weiterverarbeitungs-Endzeitpunkt 34 endet.

Um einen einwandfreien Fügeprozess zu gewährleisten, muss der Klebstoffstrang 12 zum Weiterverarbeitungs-Startzeitpunkt 30 und vorzugsweise auch zum Weiterverarbeitungs-Endzeitpunkt 34 weiterverarbeitbar sein. Das bedeutet, dass zu den genannten Zeitpunkten die Topfzeit des Klebstoffstrangs 12 an keiner Stelle abgelaufen sein darf. Desweiteren soll erreicht werden, dass der Klebstoffstrang 12 über seine gesamte Länge ungefähr zum gleichen, nach dem Weiterverarbeitungs-Endzeitpunkt 34 liegenden Zeitpunkt auszuhärten beginnt. Um dies zu erreichen, wird das Mischungsverhältnis zwischen Grundkomponente und Grundhärter während des Auftragsvorgangs 20 zeitlich variiert, wobei der Anteil der Grundkomponente im Lauf der Zeit abnimmt.

Da die Dauer des Auftragsvorgangs 20, die Dauer des Weiterverarbeitungsvorgangs 32 und der Abstand zwischen dem Auftragsendzeitpunkt 24 und dem Weiterverarbeitungs-Startzeitpunkt 30 variieren können, ist in einer den Auftragsvorgang 22 steuernden Steuereinrichtung eine Kurvenschar 36 entsprechend dem durch den Anteil der Grundkomponente definierten Mischungsverhältnis über der Zeitspanne zwischen dem jeweiligen Auftragszeitpunkt 26 und dem Weiterverarbeitungs-Startzeitpunkt 30 aufgetragen, wobei jede der Kurven das von der Steuereinrichtung vorgegebene Mischungsverhältnis für eine bestimmte Klebstofftemperatur wiedergibt. Die Kurvenschar 36 wird durch einen Kalibriervorgang für unterschiedliche Klebstofftemperaturen bestimmt. Im gezeigten Ausführungsbeispiel ist das Mischungsverhältnis 38 über der Zeitspanne 40 zwischen dem jeweiligen Auftragszeitpunkt 26 und dem Weiterverarbeitungs-Startzeitpunkt 30 aufgetragen. Besteht das geforderte Kriterium darin, dass der Klebstoffstrang 12 auch zum Weiterverarbeitungs-Endzeitpunkt 34 an jeder Stelle weiterverarbeitbar sein soll, so ist zweckmäßig das Mischungsverhältnis 38 über der Zeitspanne zwischen dem jeweiligen Auftragszeitpunkt 26 und dem Weiterverarbeitungs-Endzeitpunkt 34 aufzutragen. Die Temperatur des Klebstoffstrangs 12 wird beim Auftragen auf das Werkstück mittels eines Temperaturfühlers gemessen und an die Steuereinrichtung übermittelt, so dass diese aus der Kurvenschar 36 die richtige Kurve auswählen kann.

Das Mischungsverhältnis 38 wird somit zeitlich in Abhängigkeit von vorgegebenen Parametern, wie dem Auftragsstartzeitpunkt 22, dem Auftragsendzeitpunkt 24, dem Weiterverarbeitungs-Startzeitpunkt 30 und dem Weiterverarbeitungs-Endzeitpunkt 34 sowie in Abhängigkeit von gemessenen Parametern, wie beispielsweise der Temperatur des Klebstoffstrangs 12 so variiert, dass der Klebstoffstrang 12 zum Weiterverarbeitungs-Startzeitpunkt 30 bzw. zum Weiterverarbeitungs-Endzeitpunkt 34 noch in seiner vollen Länge zu gleichen Maßen weiterverarbeitbar ist.

Es versteht sich von selbst, dass das gezeigte Ausführungsbeispiel lediglich beispielhaft zu werten ist. Insbesondere kann ein Zeitfenster zwischen der Entnahme des Werkstücks aus der Applikationsstation 10 und dem Einsetzen des Werkstücks in die Fügestation 14 gegeben sein. Es ist auch möglich, dass der Auftragsendzeitpunkt 24 mit dem Weiterverarbeitungs-Startzeitpunkt 30 zusammenfällt, welcher wiederum mit dem Weiterverarbeitungs-Endzeitpunkt 34 zusammenfallen kann. Dies ist z. B. dann der Fall, wenn zwischen zwei bereits zueinander positionierten Werkstücken der die Werkstücke miteinander verbindende Klebstoffstrang 12 eingebracht wird. Fällt der Weiterverarbeitungs-Startzeitpunkt 30 beispielsweise auf einen späteren Zeitpunkt, so verlängert sich die Zeitspanne 40 gegenüber dem gezeigten Ausführungsbeispiel in Bezug auf jeden Auftragszeitpunkt 26, und es ist jeweils weniger Grundhärter in Bezug auf die Grundkomponente beizumischen. Auf diese Weise ist der Weiterverarbeitungsvorgang 32 in Grenzen frei wählbar.

Zusammenfassend ist folgendes festzuhalten: Die Erfindung betrifft ein Verfahren zum Auftragen einer mindestens zweikomponentigen, härtbaren und viskosen Masse in Form eine Massestrangs 12 oder einer Reihe von Massepunkten auf ein Werkstück, wobei ein Auftragsvorgang 20 zu einem Auftragsstartzeitpunkt 22 beginnt und zu einem Auftragsendzeitpunkt 24 endet, und wobei das Werkstück mit der aufgetragenen Masse für einen Weiterverarbeitungsvorgang 32 bestimmt ist, der zu einem Weiterverarbeitungs-Startzeitpunkt 30 beginnt und zu einem Weiterverarbeitungs-Endzeitpunkt 34 endet. Erfindungsgemäß ist vorgesehen, dass das Mischungsverhältnis 38 der Komponenten durch eine Steuereinrichtung in Abhängigkeit von vorgegebenen und/oder gemessenen Parametern 22, 24, 30, 34 während des Auftragsvorgangs 20 derart variiert wird, dass die auf das Werkstück aufgetragene Masse zum Weiterverarbeitungs-Startzeitpunkt 30 an jeder Stelle des Massestrangs 12 bzw. in jedem Massepunkt weiterverarbeitbar ist.

## Patentansprüche

1. Verfahren zum Auftragen einer mindestens zweikomponentigen, härtbaren und viskosen Masse in Form eines Massestrangs (12) oder einer Reihe von Massepunkten auf ein Werkstück, wobei ein Auftragsvorgang (20) zu einem Auftragsstartzeitpunkt (22) beginnt und zu einem Auftragsendzeitpunkt (24) endet, und wobei das Werkstück mit der aufgetragenen Masse für einen Weiterverarbeitungsvorgang (32) bestimmt ist, der zu einem Weiterverarbeitungs-Startzeitpunkt (30) beginnt und zu einem Weiterverarbeitungs-Endzeitpunkt (34) endet, **dadurch gekennzeichnet, dass** das Mischungsverhältnis (38) der Komponenten durch eine Steuereinrichtung in Abhängigkeit von vorgegebenen und/oder gemessenen Parametern (22, 24, 30, 34) während des Auftragsvorgangs (20) derart variiert wird, dass die auf das Werkstück aufgetragene Masse zum Weiterverarbeitungs-Startzeitpunkt (30) an jeder Stelle des Massestrangs (12) bzw. in jedem Massepunkt weiterverarbeitbar ist.

2. Verfahren nach Anspruch 1, **dadurch gekennzeichnet, dass** die aufgetragene Masse zum Weiterverarbeitungs-Endzeitpunkt (34) an jeder Stelle des Massestrangs (12) bzw. in jedem Massepunkt weiterverarbeitbar ist.

3. Verfahren nach Anspruch 1 oder 2, **dadurch gekennzeichnet, dass** das Mischungsverhältnis der Komponenten in Abhängigkeit der vorgegebenen und/oder gemessenen Parameter derart variiert wird, dass die auf das Werkstück aufgetragene Masse an jeder Stelle des Massestrangs (12) bzw. in jedem Massepunkt ungefähr zum gleichen, nach dem Weiterverarbeitungs-Endzeitpunkt (34) liegenden Zeitpunkt beginnt auszuhärten.

4. Verfahren nach einem der vorangehenden Ansprüche, **dadurch gekennzeichnet, dass** das Mischungsverhältnis (38) der Komponenten in Abhängigkeit von der Temperatur der Umgebung und/oder der Temperatur des Werkstücks und/oder der Temperaturen der Komponenten und/oder der Temperatur der Masse variiert wird.

5. Verfahren nach Anspruch 4, **dadurch gekennzeichnet, dass** mittels mindestens eines Temperaturfühlers die Temperatur der Umgebung und/oder die Temperatur des Werkstücks und/oder die Temperatur der Komponenten und/oder die Temperatur der Masse vorzugsweise zeitabhängig gemessen und an die Steuereinrichtung übermittelt wird.

6. Verfahren nach Anspruch 4 oder 5, **dadurch gekennzeichnet, dass** die Temperatur der Umgebung und/oder die Temperatur des Werkstücks und/oder die Temperatur der Komponenten und/oder die Temperatur der Masse als vorgegebener und vorzugsweise abgeschätzter Parameter in der Steuereinrichtung gespeichert ist.

7. Verfahren nach einem der vorangehenden Ansprüche, **dadurch gekennzeichnet, dass** dem Auftragsvorgang (20) vorangehend in einem Kalibriervorgang die erforderlichen Mischungsverhältnisse (38) der Komponenten in Abhängigkeit von den Parametern bestimmt und in der Steuereinrichtung gespeichert werden.

8. Verfahren nach einem der vorangehenden Ansprüche, **dadurch gekennzeichnet, dass** die Komponenten eine Grundkomponente und einen Grundhärter aufweisen.

9. Verfahren nach Anspruch 8, **dadurch gekennzeichnet, dass** das Mischungsverhältnis (38) der Grundkomponente und des Grundhärters während des Auftragsvorgangs (20) variiert wird, wobei die Konzentration des Grundhärters gegenüber der Konzentration der Grundkomponente ansteigt.

10. Verfahren nach Anspruch 8, **dadurch gekennzeichnet, dass** die Grundkomponente und der Grundhärter in konstantem Mischungsverhältnis aufgetragen werden und dass mindestens eine Zusatzkomponente in variabler Konzentration beigemischt wird.

11. Verfahren nach Anspruch 10, **dadurch gekennzeichnet, dass** die Zusatzkomponente oder eine der Zusatzkomponenten ein das Aushärten der Masse beschleunigender Zusatzhärter ist, dessen Konzentration im Verlauf des Auftragsvorgangs (20) ansteigt.

12. Verfahren nach Anspruch 10, **dadurch gekennzeichnet, dass** die Zusatzkomponente oder eine der Zusatzkomponenten ein das Aushärten der Masse verzögernder Verzögerer ist, dessen Konzentration im Verlauf des Auftragsvorgangs (20) sinkt.

## Claims

1. Method for application of an at least two-component, curable and viscous compound in the form of a compound strand (12) or a series of compound spots onto a workpiece, wherein an application process (20) begins at an application starting time (22) and ends at an application ending time (24), and wherein the workpiece with the applied compound is intended for a further processing process (32), which begins at a further processing starting time (30) and ends at a further processing ending time (34), **characterized in that** the mixing ratio (38) of the components is varied by a control device as a function of predetermined and/or measured parameters (22, 24, 30, 34) during the application process (20) in such a way that, at the further processing starting time (30), the compound applied on the workpiece is further processable at each place of the compound strand (12) or at each compound spot.

2. Method according to claim 1, **characterized in that**, at the further processing ending time (34), the applied compound is further processable at each place of the compound strand (12) or at each compound spot.

3. Method according to claim 1 or 2, **characterized in that** the mixing ratio of the components is varied as a function of the predetermined and/or measured parameters in such a way that the compound applied on the workpiece begins to cure at approximately the same time after the further processing ending time (34) at every place of the compound strand (12) or at every compound spot.

4. Method according to one of the preceding claims, **characterized in that** the mixing ratio (38) of the components is varied as a function of the temperature of the environment and/or the temperature of the workpiece and/or the temperature of the components and/or the temperature of the compound.

5. Method according to claim 4, **characterized in that** the temperature of the environment and/or the temperature of the workpiece and/or the temperature of the components and/or the temperature of the compound is measured, preferably as a function of time, by means of at least one temperature sensor and communicated to the control device.

6. Method according to claim 4 or 5, **characterized in that** the temperature of the environment and/or the temperature of the workpiece and/or the temperature of the components and/or the temperature of the compound is saved as a predetermined and preferably estimated parameter in the control device.

7. Method according to one of the preceding claims, **characterized in that**, prior to the application process (20), the necessary mixing ratios (38) of the components are determined in a calibration process as a function of the parameters and saved in the control device.

8. Method according to one of the preceding claims, **characterized in that** the components comprise a base component and a base curing agent.

9. Method according to claim 8, **characterized in that** the mixing ratio (38) of the base component and of the base curing agent is varied during the application process (20), wherein the concentration of the base curing agent is increased relative to the concentration of the base component.

10. Method according to claim 8, **characterized in that** the base component and the base curing agent are applied in constant mixing ratio and **in that** at least one additional component is admixed in variable concentration.

11. Method according to claim 10, **characterized in that** the additional component or one of the additional components is an additional curing agent that accelerates the curing of the compound and the concentration of which increases in the course of the application process (20).

12. Method according to claim 10, **characterized in that** the additional component or one of the additional components is a retarding agent that retards the curing of the compound and the concentration of which decreases in the course of the application process (20).

## Revendications

1. Procédé d'application d'une pâte à au moins deux composants, durcissable et visqueuse, sous la forme d'un boudin de pâte (12) ou d'une rangée de points de pâte sur une pièce, une opération d'application (20) commençant à un instant de début d'application (22) et se terminant à un instant de fin d'application (24), et la pièce munie de la pâte appliquée étant destinée à une opération de transformation (32), laquelle commence à un instant de début de transformation (30) et se termine à un instant de fin de transformation (34), **caractérisé en ce que** le rapport de mélange (38) des composants est modifié pendant l'opération d'application (20) par un dispositif de commande en fonction de paramètres (22, 24, 30, 34) prédéfinis et/ou mesurés de telle sorte que la pâte appliquée sur la pièce est apte à la transformation à tout endroit du boudin de pâte (12) ou en tout point de pâte à l'instant de début de transformation (30).

2. Procédé selon la revendication 1, **caractérisé en ce que** la pâte appliquée est apte à la transformation à tout endroit du boudin de pâte (12) ou en tout point de pâte à l'instant de fin de transformation (34).

3. Procédé selon la revendication 1 ou 2, **caractérisé en ce que** le rapport de mélange des composants est modifié en fonction des paramètres prédéfinis et/ou mesurés de telle sorte que la pâte appliquée sur la pièce commence à durcir à peu près au même instant, situé après l'instant de fin de transformation (34), à tout endroit du boudin de pâte (12) ou en tout point de pâte.

4. Procédé selon l'une des revendications précédentes, **caractérisé en ce que** le rapport de mélange (38) des composants est modifié en fonction de la température de l'environnement et/ou de la température de la pièce et/ou des températures des composants et/ou de la température de la pâte.

5. Procédé selon la revendication 4, **caractérisé en ce que** la température de l'environnement et/ou la température de la pièce et/ou la température des composants et/ou la température de la pâte sont mesurées au moyen d'au moins un capteur de température, de préférence en fonction du temps, et transmises au dispositif de commande.

6. Procédé selon la revendication 4 ou 5, **caractérisé en ce que** la température de l'environnement et/ou la température de la pièce et/ou la température des composants et/ou la température de la pâte sont mémorisées sous forme de paramètres prédéfinis et de préférence estimés dans le dispositif de commande.

7. Procédé selon l'une des revendications précédentes, **caractérisé en ce que** dans une opération d'étalonnage précédant l'opération d'application (20), les rapports de mélange (38) nécessaires des composants sont déterminés en fonction des paramètres et mémorisés dans le dispositif de commande.

8. Procédé selon l'une des revendications précédentes, **caractérisé en ce que** les composants présentent un composant de base et un durcisseur de base.

9. Procédé selon la revendication 8, **caractérisé en ce que** le rapport de mélange (38) du composant de base et du durcisseur de base est modifié pendant l'opération d'application (20), la concentration du durcisseur de base augmentant par rapport à la concentration du composant de base.

10. Procédé selon la revendication 8, **caractérisé en ce que** le composant de base et le durcisseur de base sont appliqués dans un rapport de mélange constant et qu'au moins un composant additionnel est ajouté en concentration variable.

11. Procédé selon la revendication 10, **caractérisé en ce que** le composant additionnel ou l'un des composants additionnels est un durcisseur additionnel accélérant le durcissement de la pâte, dont la concentration augmente au cours de l'opération d'application (20).

12. Procédé selon la revendication 10, **caractérisé en ce que** le composant additionnel ou l'un des composants additionnels est un retardateur retardant le durcissement de la pâte, dont la concentration diminue au cours de l'opération d'application (20).
